# EUROPÄISCHE PATENTANMELDUNG

(11) **EP 1 640 425 A2**
(43) Veröffentlichungstag der Anmeldung: **29.03.2006**
(21) Anmeldenummer: 05018660.0
(22) Anmeldetag: 27.08.2005
(51) Int. Cl.: C09J 5/04

(54) **Sicherheitselement**

(30) Priorität: 03.09.2004 AT 14842004
(71) Anmelder: Hueck Folien Ges.m.b.H, 4342 Baumgartenberg (AT)
(72) Erfinder: Kastner, Friedrich, Dr., 4710 Grieskirchen (AT); Keplinger, Jürgen, 4320 Perg (AT); Kammerer, Hans-Hermann, 42637 Weiden (DE)
(74) Vertreter: Landgraf, Elvira

(57) **Zusammenfassung**

Die Erfindung betrifft ein Mehrschichtklebesystem insbesondere für Transferapplikationen auf oder zur Einbettung von Sicherheitselementen in ein Substrat, wobei dass das Sicherheitselement eine Beschichtung, die eine reaktive organische Verbindung enthält, aufweist, die bei der Applikation auf oder Einbettung in ein Substrat mit einer Zusammensetzung, die einen Härter enthält, in Verbindung gebracht wird.

## Beschreibung

Die Erfindung betrifft ein Mehrschichtklebesystem, insbesondere für Transferapplikationen.

Sicherheitsmerkmale, insbesondere in Form von Fäden, Streifen, Patches oder anderen Formaten, werden entweder in ein Substrat zumindest eingebettet (z.B. bei Sicherheitsstreifen in Banknoten, oder Verpackungen) oder auf ein Substrat appliziert (z.B. Wertdokumente, wie Banknoten, Karten und dergleichen, Verpackungen).
Die Sicherheitsmerkmale bestehen dabei üblicherweise aus einem Trägersubstrat, auf das eine oder bevorzugt mehrere oft unterschiedliche funktionelle Schichten aufgebracht sind.

Bei der Applikation auf ein Substrat soll die Applikationstemperatur niedrig gehalten werden, da manche der funktionellen Schichten nicht gegen hohe Temperaturen ausreichend stabil sind. Femer beeinflusst die Notwendigkeit hohe Temperaturen für den Applikationsvorgang anzuwenden die Produktionsgeschwindigkeit negativ.

Nach der Applikation soll das Sicherheitsmerkmal aber nur durch Zerstörung vom Substrat ablösbar sein und außerdem hohe chemische und physikalische Beständigkeiten aufweisen.

Die Beständigkeit der Klebesysteme für die Applikation von Sicherheitsmerkmalen auf Substraten wird derzeit durch Klebesysteme mit hohem Tg oder durch Verwendung geblockter Isocyanate nur unzureichend erreicht.

Ferner ergeben sich bei der Applikation mittels solcher Klebesysteme Schwierigkeiten durch Schrumpf der Sicherheitsmerkmale bei höherer Temperatur. Femer sind die Sicherheitsmerkmale vor der Applikation nur beschränkt lagerfähig. Besonders bei Systemen mit beigemengtem Initiator findet of schon eine Vorreaktion bereits bei Zimmertemperatur statt. Auch geblockte oder sterisch gehinderte Härter können insbesondere bei beim Transport oft unvermeidlichen höheren Temperaturen eine Vorreaktion auslösen, wodurch die Klebefähigkeit und die Stabilität beeinträchtigt werden.

Gegenstand der Erfindung ist daher ein Mehrschichtklebesystem insbesondere für Transferapplikationen auf oder Einbettung von Sicherheitselementen in ein Substrat, dadurch gekennzeichnet, dass das Sicherheitselement eine Beschichtung, die eine reaktive organische Verbindung enthält, aufweist, die bei der Applikation auf oder Einbettung in ein Substrat mit einer Zusammensetzung die einen Härter enthält, in Verbindung gebracht wird.

Dabei kann der Härter bei der Applikation Inline aufgebracht werden oder das Substrat zumindest in jenem Bereich, in dem das Sicherheitselement auf das Substrat aufgebracht werden soll, eine Beschichtung, die einen Härter enthält, (Platzierungsprimer) aufweisen.

Als reaktive organische Beschichtungen mit denen das Sicherheitselement ausgerüstet wird kommen beispielsweise Zusammensetzungen mit organischen Verbindungen mit endständigen Hydroxylgruppen, beispielsweise Polyesterpolyole in Frage. Vorzugsweise weisen diese Polyesterpolyole einen Hydroxylgruppengehalt von > 3 Gew.% auf.
In diesem Fall besteht der Härter aus einer Zusammensetzung, die freie Isocyanatgruppen aufweist. Es können aber auch geblockte Isocyanate in der Beschichtungszusammensetzung vorhanden sein.

Bei der Applikation des Sicherheitselements auf das Substrat findet dann unter Temperatureinwirkung eine gezielte Polyadditionsreaktion zwischen den NCO-Gruppen des Härters bzw. Platzierungsprimers und den OH-Gruppen der reaktiven Beschichtung statt, wobei beständige kovalent gebundene Polyurethanderivate gebildet werden.

Gegebenenfalls kann diese Additionsreaktion durch Zusatz eines geeigneten Katalysators, beispielsweise durch ein tertiäres Amin, beispielsweise Triethylamin oder Metallkomplexverbindungen, beispielsweise DBTL Dibutyllaureat, Titanylacetonat, beschleunigt werden. Ferner wird durch die Verwendung eines Katalysators der Grad der Polyaddition erhöht, wodurch auch eine höhere Bestäridigkeit gegen chemische und physikalische Einwirkungen erzielt wird.

Femer kommen als reaktive Beschichtungen Zusammensetzungen auf Basis von acrylhältigen Copolymeren, beispielsweise Ethylenacrylat-copolymere Acryl-Polymerdispersionen oder Acryl-Styrol-Polymerdispersionen oder Polyesteracrylate in Frage. Vorzugsweise enthalten die Dispersionen 20 ― 50 Gew% Feststoff in vorzugsweise Wasser dispergiert.
Gegebenenfalls können in der Dispersion auch Filmbildungsmittel, wie beispielsweise Glykolether enthalten sein.

In diesem Fall besteht der Härter bzw. Platzierungsprimer aus einer Zusammensetzung die Aziridinderivate oder Polyimine, beispielsweise Cross Linker CX 100, enthält.
Vorzugsweise beträgt der Gehalt an Härter 0,5 bis 3 Gew%.

Als Katalysatoren können zur Beschleunigung der Reaktion und zur Erhöhung des Polymerisationsgrades Fotoinitiatoren eingesetzt werden. Diese Fotoinitiatoren setzten nur unter UV-Licht die notwendigen Protonen frei, sodass hier eine Steuerung sowohl der Geschwindigkeit, als auch des Grades der Polyaddition möglich ist. Die dem Fachmann geläufigen Fotoinitiatoren, sind bei einer Wellenlänge von 200 ― 600 nm aktivierbar.

Der Katalysator wird vorzugsweise dem Primer oder der Beschichtung zugegeben, er kann aber auch in beiden Beschichtungen, das heißt sowohl in der reaktiven Beschichtung des Sicherheitselementes als auch im Härter oder im Platzierungsprimer des Substrats vorhanden sein.

Als Trägersubstrat für das Sicherheitselement, das mit der reaktiven organischen Verbindung ausgerüstet wird, kommen beispielsweise Trägerfolien vorzugsweise flexible Kunststofffolien, beispielsweise aus Pl, PP, MOPP, PE, PPS, PEEK, PEK, PEI, PSU, PAEK, LCP, PEN, PBT, PET, PA, PC, COC, POM, ABS, PVC in Frage. Die Trägerfolien weisen vorzugsweise eine Dicke von 5 - 700 µm, bevorzugt 8 ― 200 µm, besonders bevorzugt 12 ― 50 µm auf.

Femer können als Trägersubstrat auch Metallfolien, beispielsweise Al-, Cu-, Sn-, Ni-, Fe- oder Edelstahlfolien mit einer Dicke von 5 ― 200 µm, vorzugsweise 10 bis 80 µm, besonders bevorzugt 20 ― 50 µm dienen. Die Folien können auch oberflächenbehandelt, beschichtet oder kaschiert beispielsweise mit Kunststoffen oder lackiert sein.

Femer können als Trägersubstrate auch Papier oder Verbunde mit Papier, beispielsweise Verbunde mit Kunststoffen mit einem Flächengewicht von 20 ― 500 g/m², vorzugsweise 40 ― 200 g/m². verwendet werden.

Ferner können als Trägersubstrate Gewebe oder Vliese, wie Endlosfaservliese, Stapelfaservliese und dergleichen, die gegebenenfalls vernadelt oder kalandriert sein können, verwendet werden. Vorzugsweise bestehen solche Gewebe oder Vliese aus Kunststoffen, wie PP, PET, PA, PPS und dergleichen, es können aber auch Gewebe oder Vliese aus natürlichen, gegebenenfalls behandelten Fasem, wie Viskosefaservliese eingesetzt werden. Die eingesetzten Gewebe oder Vliese weisen ein Flächengewicht von etwa 20 g/m² bis 500 g/m² auf. Gegebenfalls können diese Gewebe oder Vliese oberflächenbehandelt sein.

Als Trägersubstrate können auch Hologrammfolien optisch variable Folien, gegebenenfalls in Kombination mit anderen Sicherheitselementen verwendet werden.

Als funktionelle Schichten kann das Sicherheitselement Schichten mit optischen, optisch variablen, elektrisch leitfähigen und/oder magnetischen Eigenschaften aufweisen.

Als funktionelle Schicht mit elektrisch leitfähigen Eigenschaften können beispielsweise Farben und Lacke mit elektrisch leitfähigen Pigmenten, beispielsweise, Graphit, Ruß, leitfähige organische oder anorganische Polymere, Metallpigmente (beispielsweise Kupfer, Aluminium, Silber, Gold, Eisen, Chrom und dergleichen), Metalllegierungen wie Kupfer-Zink oder Kupfer-Aluminium oder auch amorphe oder kristalline keramische Pigmente wie ITO, FTO, ATO und dergleichen verwendet werden. Weiters können auch dotierte oder nicht dotierte Halbleiter wie beispielsweise Silicium, Germanium, Galliumarsenid, Arsen oder lonenleiter wie amorphe oder kristalline Metalloxide oder Metallsulfide als Zusatz verwendet werden. Femer können zur Einstellung der elektrischen Eigenschaften der Schicht polare oder teilweise polare Verbindungen wie Tenside, oder unpolare Verbindungen wie Silikonadditive oder hygroskopische oder nicht hygroskopische Salze verwendet oder zugesetzt werden. Ebenso können intrinsisch leitfähige organische Polymere wie Polyanilin, Polyacetylen, Polyethylendioxythiophen und/oder Polystyrolsulfonat zugesetzt werden.

Als funktionelle Schicht mit magnetischen Eigenschaften können paramagnetische, diamagnetische und auch ferromagnetische Stoffe, wie Eisen, Nickel, Barium, und Cobalt oder deren Verbindungen oder Salze (beispielsweise Oxide oder Sulfide) verwendet werden. Besonders geeignet sind Fe(II)- und Fe(III)-Oxide, Barium- bzw. Cobaltferrite, seltene Erden und dergleichen.

Die optischen Eigenschaften der Schicht lassen sich durch sichtbare Farben bzw. Pigmente, lumineszierende Farbstoffe bzw. Pigmente, die im sichtbaren, im UV-Bereich oder im IR-Bereich fluoreszieren oder phosphoreszieren, wärmeempfindliche Farben bzw. Pigmente, Effektpigmente, wie Flüssigkristalle, Perlglanz-, Bronzen und/oder Multilayer-Farbumschlagspigmente beeinflussen. Diese sind in allen möglichen Kombinationen einsetzbar.

Es können auch verschiedene Eigenschaften durch Zufügen verschiedener oben genannter Zusätze kombiniert werden. So ist es möglich angefärbte und/oder leitfähige Magnetpigmente zu verwenden. Dabei sind alle genannten leitfähigen Zusätze verwendbar.
Speziell zum Anfärben von Magnetpigmenten lassen sich alle bekannten löslichen und nicht löslichen Farbstoffe bzw. Pigmente verwenden. So kann beispielsweise eine braune Magnetfarbe durch Zugabe von Metallen in ihrem Farbton metallisch, beispielsweise silbrig eingestellt werden.

Femer kann eine Schicht auch optisch aktive Eigenschaften aufweisen. Hier kommen beispielsweise Beugungsstrukturen, diffraktive Strukturen, Hologramme, Oberflächenreliefs und dergleichen in Frage, die ggf. partiell metallisiert sein können.
Diese Strukturen werden vorzugsweise in thermoplastische oder UV-härtende Schichten eingebracht.

Als Substrate, auf die das Sicherheitselement appliziert bzw. in die das Sicherheitselement eingebettet wird, kommen beispielsweise zellstofffreies oder zelistoffhaltiges Papier, Papier mit thermoaktivierbarer Beschichtung oder Kunststoffe, beispielsweise aus PI, PP, MOPP, PE, PPS, PEEK, PEK, PEI, PSU, PAEK, LCP, PEN, PBT, PET, PA, PC, COC, POM, ABS, PVC, oder Verbunde von Papier mit Kunststoffen oder Metallfolien oder Vliese in Frage.

Bei der Applikation auf ein saugfähiges Substrat, beispielsweise Papiere oder Papierverbunde, wird vorzugsweise eine Zusammensetzung, die einen Härter enthält, als Platzierungsprimer auf das Substrat aufgebracht.

Es können aber auch zur Verminderung der Saugfähigkeit des Substrats vorerst andere Oberflächenbeschichtungen, die nicht nur in jenem Beriech, in dem das Sicherheitselement appliziert werden soll, vorhanden sein können, aufgebracht werden und anschließend die Zusammensetzung, die den Härter enthält, inline beim Applikationsprozess aufgebracht werden.

Beispielhafte Zusammensetzungen zur Verringerung der Saugfähigkeit des Substrats sind aus der WO 00/00679 bekannt.

Ferner können als Beschichtung zur Verringerung der Saugfähigkeit des Substrats auch Oberflächenbeschichtungszusammensetzungen auf Basis von Acryl-Polymerdispersionen oder Acryl-Styrol-Polymerdispersionen oder Polyurethandispersionen oder Polyesteracrylat aufgebaut ist, wobei Acryl-Polymerdispersionen oder Acryl-Styrol-Polymerdispersionen vorzugsweise eine T_{g} von -20 ― +100°C und eine MFT von 0 -100°C aufweisen die zusätzlich ein Polyimin enthalten, in einer oder mehreren Schichten aufgebracht werden.

Vorzugsweise wird jedoch das saugfähige Substrat vorerst mit dem erfindungsgemäßen Platzierungsprimer zumindest in jenem Bereich in dem das Sicherheitselement appliziert werden soll, beschichtet. Dabei können alle üblichen Beschichtungsverfahren, wie Lackieren, Sprühen, Streichen, Druckverfahren Walzenauftragstechniken und dergleichen verwendet werden. Dadurch wird die Saugfähigkeit des Substrats ausreichend vermindert, das Sicherheitselement kann anschließend durch übliche Verfahren unter Druck und/oder Temperatureinwirkung aufgebracht werden.

Durch das erfindungsgemäße reaktive Klebesystem wird gegenüber bekannten Applikationssystemen eine erhöhte Beständigkeit gegen chemische und physikalische Einwirkungen erreicht. Die Härtung und damit intensive Verbindung von Sicherheitselement und Substrat wird durch die beim Applikationsvorgang initiierte Verbindung durch chemische Reaktionen (Poyladdition) erreicht, ohne die Authentizität und Funktionsweise der funktionellen Schichten des Sicherheitselements durch hohe Temperaturen beim Applikationsvorgang zu beeinträchtigen.

Sowohl der Platzierungsprimer als auch die Beschichtung kann pigmentiert sein.
Als Pigmente kommen alle üblichen anorganischen oder organische Pigmente in Frage.

Die Applikation bzw. die Einbettung des Sicherheitselements auf bzw. in das Substrat erfolgt in Abhängigkeit von der Zusammensetzung des Klebesystems, sowie des verwendeten Substrats üblicherweise bei Temperaturen von 50 bis 150°C, vorzugsweise bei Temperaturen von 60 bis 100°C.

### Beispiele:

### Beispiel 1:

| | |
|---|---|
| Aufbau: | PET -Folie (PET wird nach der Bespurung abgezogen) |
| | UV Lack mit Hologrammprägung |
| | Primer |
| | Sizing 1 |
| | Platzierungsprimer |
| | Banknotenpapier |

A) Lösemittelhaltig

| | | |
|---|---|---|
| Sizing 1 | Vinnol E 15/48 | 25T |
| | MEK | 75T |

| Platzierungsprimer | | |
|---|---|---|
| | Vinnol E 15/48 | 21,0 T |
| | Desmodur L 75 | 13,8T |
| | MEK | 65,2T |

Auftragsmenge je 3,5g/m³ Sizing und Platzierungsprimer
Der Platzierungsprimer ist zu 100% übervemetzt. Beim Zusammenfügen beider Lackschichten durch Temperatur migriert der Härter in Sizing 1 und vernetzt das Gesamtsystem.
B) Wasserbasiert

| | | |
|---|---|---|
| Sizing 2 | Ethylenacrylat Copolymer | 90T |
| | Wasser IPA 1:1 | 10T |

| Platzierungsprimer 2 | | |
|---|---|---|
| | Ethylenacrylat Copolymer | 90T |
| | Wasser IPA 1:1 | 6T |
| | Aziridin | 4T |

## Patentansprüche

1. Mehrschichtklebesystem insbesondere für Transferapplikationen auf oder zur Einbettung von Sicherheitselementen in ein Substrat, **dadurch gekennzeichnet, dass** das Sicherheitselement eine Beschichtung, die eine reaktive organische Verbindung enthält, aufweist, die bei der Applikation auf oder Einbettung in ein Substrat mit einer Zusammensetzung, die einen Härter enthält, in Verbindung gebracht wird.

2. Mehrschichtklebesystem nach Anspruch 1, **dadurch gekennzeichnet, dass** die Beschichtung, die eine reaktive organische Verbindung enthält, eine Zusammensetzung mit organischen Verbindungen mit endständigen Hydroxylgruppen ist.

3. Mehrschichtklebesystem nach Anspruch 2, **dadurch gekennzeichnet, dass** der Hydroxylgruppengehalt > 3% beträgt.

4. Mehrschichtklebesystem nach einem der Ansprüche 1 bis 3, **dadurch gekennzeichnet, dass** der Härter eine Zusammensetzung, die freie Isocyanatgruppen aufweist, ist.

5. Mehrschichtklebesystem nach einem der Ansprüche 1 bis 4, **dadurch gekennzeichnet, dass** der Härter in eine Beschichtung, die auf dem Substrat vorhanden ist (Platzierungsprimer), eingebracht ist.
